Europäisches Patentamt

European Patent Office

Office européen des brevets

(11) Veröffentlichungsnummer: **0 249 731**
**B1**

(12) **EUROPÄISCHE PATENTSCHRIFT**

(45) Veröffentlichungstag der Patentschrift:
14.03.90

(21) Anmeldenummer: 87106604.9

(22) Anmeldetag: 07.05.87

(51) Int. Cl.⁴: **F16B 13/08**

(54) Schlagspreizdübel.

(30) Priorität: 14.06.86 DE 3620099

(43) Veröffentlichungstag der Anmeldung:
23.12.87 Patentblatt 87/52

(45) Bekanntmachung des Hinweises auf die Patenterteilung:
14.03.90 Patentblatt 90/11

(84) Benannte Vertragsstaaten:
AT BE CH ES FR GB GR IT LI NL SE

(56) Entgegenhaltungen:
DE-A- 3 117 581
GB-A- 511 741
GB-A- 2 109 886
US-A- 1 474 154

(73) Patentinhaber: fischer-werke Artur Fischer GmbH & Co. KG, Weinhalde 14-18,
D-7244 Waldachtal 3/Tumlingen(DE)

(72) Erfinder: Fischer, Artur, Prof. Dr. h. c., Weinhalde 34,
D-7244 Tumlingen/Waldachtal 3(DE)

## Beschreibung

Die Erfindung betrifft einen Schlagspreizdübel für die Verankerung in insbesondere konisch nach innen erweiterten Bohrlöchern bestehend aus einem eine Innenbohrung aufweisenden und von seinem Einführende ausgehend über einen Teil seiner Länge geschlitzten Spreizanker, der durch Auftreiben auf einen am Bohrlochgrund aufsitzenden und mit einem Spreizkonus versehenen Spreizkörper verankerbar ist.

Aus der DE-A 31 17 581 ist ein Schlagspreizdübel der obengenannten Art bekannt. Das Auftreiben eines Spreizankers auf einen am Bohrlochgrund aufsitzenden Spreizkörper hat gegenüber Schlagspreizdübeln, die durch Eintreiben eines Spreizstiftes von der Frontseite her durch eine Innenbohrung des Spreizdübels verankert werden, den Vorteil, daß das Größtmaß des Spreizkörpers dem Durchmesser des zylindrischen Teils des Bohrloches im Ankergrund entsprechen kann. Damit wird ein erheblich höheres Aufspreizmaß erreicht, das bei der Verankerung eines solchen Schlagspreizdübels in einem Bohrloch mit einer Erweiterung im Bereich des Bohrlochgrundes zur Ausfüllung dieser Erweiterung erforderlich ist. Der dadurch erreichbare Formschluß des Schlagspreizdübels in dieser Erweiterung führt zu erheblich höheren Haltewerten einerseits und einer größeren Sicherheit bei durch die Bohrung verlaufenden Rissen andererseits.

Aufgrund der weniger starken Verspannung des Spreizankers in einem hinterschnittenen Bohrloch und des in Richtung Bohrlochmündung sich verjüngenden Spreizkonusses können jedoch durch eine am Spreizanker angreifende Zugkraft die Spreizlamellen vom Spreizkonus abgezogen werden. Die erhöhte Haltekraft ist somit nur dann erreichbar, wenn dieses Abgleiten verhindert wird.

Der Erfindung liegt die Aufgabe zugrunde, einen Schlagspreizdübel zu schaffen, der kostengünstig herstell- und einfach montierbar ist, sowie hohe Haltewerte aufweist und hohen Sicherheitsansprüchen genügt.

Erfindungsgemäß wird dies dadurch erreicht, daß der Spreizkörper mit einem rohrförmigen, in die Innenbohrung des Spreizankers eingreifenden Ansatz versehen ist, dessen Ende nach dem Auftreiben des Spreizankers auf den Spreizkonus des Spreizkörpers sich in einer Erweiterung der Innenbohrung des Spreizankers befindet und aufweitbar ist.

Zur Verankerung des erfindungsgemäßen Schlagspreizdübels wird dieser soweit in das vorbereitete, eine Hinterschneidung aufweisende Bohrloch eingesetzt, bis das einführseitige Stirnende des Spreizkörpers auf dem Bohrlochgrund aufsitzt. Danach wird mit Schlägen auf die Stirnseite des Spreizankers entweder mit einem in einen Bohrhammer eingespannten Einschlagwerkzeug oder mit einem Hammer der Spreizanker auf den am Bohrlochgrund aufsitzenden Spreizkörper aufgetrieben. Die Spreizsegmente des Spreizankers dringen dabei in die Hinterschneidung des Bohrloches ein und bilden zusammen mit dem Spreizkörper in der Hinterschneidung einen gegen Rißbildung unempfindlichen Formschluß. Das Ende des an dem Spreizkörper angeordneten rohrförmigen Ansatzes verschiebt sich beim Auftreibvorgang in den erweiterten Teil der Innenbohrung des Spreizankers. Mit einem eine Spitze aufweisenden Dorn oder durch Einschlagen eines Keiles in die Innenbohrung des rohrförmigen Ansatzes des Spreizkörpers wird das Ende des Ansatzes zur Bildung eines Wulstes aufgeweitet, der die Spreizstellung des Spreizankers auf dem Spreizkörper fixiert. Greift nunmehr eine Zugkraft am Spreizanker an, wird der Spreizkörper mitgezogen, so daß keine Reduzierung des Aufspreizmaßes eintritt.

In einer weiteren Ausgestaltung der Erfindung kann der Keil in der Bohrung des Ansatzes vormontiert sein. Durch den vormontierten Keil wird zum einen die Montage erleichtert und zum anderen wird die Aufweitung des rohrförmigen Ansatzes durch den Keil abgestützt, so daß auch bei Höchstbelastungen ein Abziehen des Spreizankers vom Spreizkörper nicht zu befürchten ist.

In der Zeichnung ist ein Ausführungsbeispiel der Erfindung dargestellt.

Es zeigen:

Figur 1 einen im Bohrloch des Ankergrundes eingesetzten Schlagspreizdübel im ungespreizten Zustand

Figur 2 den Schlagspreizdübel nach Figur 1 in gespreiztem Zustand

Figur 3 die Befestigung eines Gegenstandes mit dem verankerten Schlagspreizdübel.

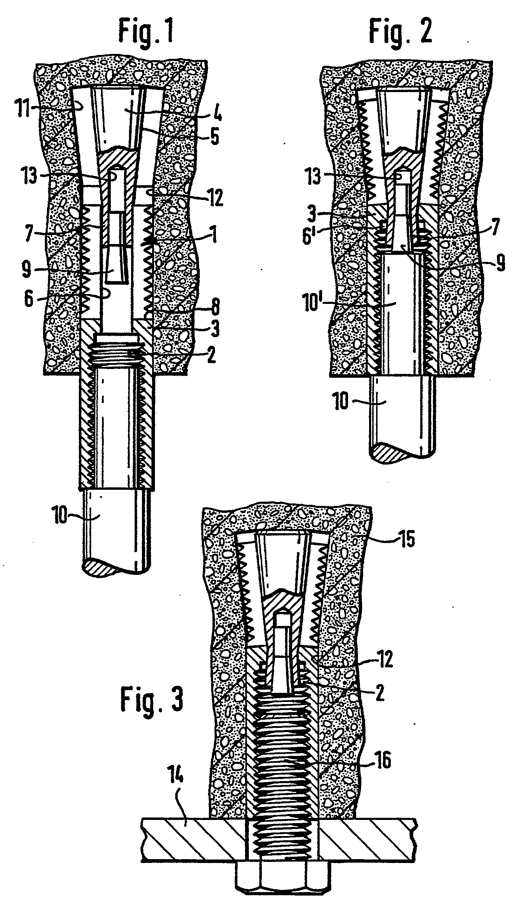

Der Schlagspreizdübel 1 besteht aus dem ein Innengewinde 2 aufweisenden Spreizanker 3 und einem Spreizkörper 4 mit einem Spreizkonus 5, der einen in die Innenbohrung 6 des Spreizankers 3 eingreifenden rohrförmigen Ansatz 7 aufweist. Die Innenbohrung 6 des Spreizankers erweitert sich nach dem durch die Schlitze 8 gebildeten Spreizteil auf den Kerndurchmesser des Innengewindes 2. Auf das Ende des rohrförmigen Ansatzes 7 ist ein Keil 9 aufgesetzt. Zur Verankerung des Schlagspreizdübels 1 wird der Spreizanker 3 vorzugsweise unter Verwendung des in Figur 1 und 2 dargestellten Einschlagwerkzeuges 10 auf den am Bohrlochgrund aufsitzenden Spreizkörper 4 aufgetrieben. Dabei werden die Spreizlamellen über den Spreizkonus 5 in die V-förmige Hinterschneidung 11 des Bohrloches 12 eingebogen und bilden in der Hinterschneidung 11 zusammen mit dem Spreizkörper 4 einen Formschluß. Während des Eintreibvorganges bewegt sich das Ende des rohrförmigen Ansatzes 7 mit dem aufgesetzten Keil 9 in die Erweiterung 6' der Innenbohrung 6 des Spreizankers 3 hinein. Bevor die Aufspreizung endgültig erfolgt ist, stößt der Keil 9 an der Stirnseite des in der Innenbohrung 6 des Spreizankers 3 befindlichen Ansatzes 10' des Einschlagwerkzeuges 10 an, so daß beim letzten Teilstück des Auftreibvorganges gleichzeitig auch der Keil 9 in die Innenbohrung 13 des rohrförmigen Ansatzes 7 eingetrieben wird. Der Keil 9 weitet dabei das Ende des Ansatzes 7 soweit auf, daß der Spreizkörper 4 mit dem Spreizanker 3 nietartig fest verbunden wird. Selbst bei hohen auf den Spreizanker wirkenden Zugkräften ist somit ein Abziehen des Spreizankers 3 vom Spreizkörper 4 nicht mehr möglich.

In das Innengewinde 2 des in dem hinterschnittenen Bohrloch 12 verankerten Schlagspreizdübels 1 wird zur Befestigung eines Gegenstandes 14 am Verankerungsgrund 15 eine Befestigungsschraube 16 eingeschraubt.

## Patentansprüche

1. Schlagspreizdübel für die Verankerung in insbesondere konisch nach innen erweiterten Bohrlöchern, bestehend aus einem eine Innenbohrung (6) aufweisenden und von seinem Einführende ausgehend über einen Teil seiner Länge geschlitzten Spreizanker (3), der durch Auftreiben auf einen am Bohrlochgrund aufsitzenden und mit einem Spreizkonus (5) versehenen Spreizkörper (4) verankerbar ist, dadurch gekennzeichnet, daß der Spreizkörper (4) mit einem rohrförmigen, in die Innenbohrung (6) des Spreizankers (3) eingreifenden Ansatz (7) versehen ist, dessen Ende nach dem Auftreiben des Spreizankers (3) auf den Spreizkonus (5) des Spreizkörpers (4) sich in einer Erweiterung der Innenbohrung (6) des Spreizankers (3) befindet und aufweitbar ist.

2. Spreizdübel nach Anspruch 1, dadurch gekennzeichnet, daß das Ende des Ansatzes (7) mittels eines Keiles (9) aufweitbar ist, der in der Bohrung des Ansatzes (7) vormontiert ist.

## Claims

1. Expansible fixing plug for anchoring by impact in bored holes, in particular in bored holes that are broadened out towards their inner end, comprising an expansible anchor (3) which has an internal bore (6) and which starting from its insertion end, is slit for a part of its length, which expansible anchor can be anchored by driving it onto an expander body (4) provided with an expander cone (5) and located at the bottom of the bored hole, characterised in that the expander body (4) is provided with a tubular extension (7) for engaging the internal bore (6) of the expansible anchor (3), the end of which extension, once the expansible anchor (3) has been driven onto the expander cone (5) of the expander body (4), being located in an enlarged portion of the internal bore (6) of the expansible anchor (3) and being arranged to be expanded.

2. Expansible fixing plug for anchoring by impact according to claim 1, characterised in that the end of the extension (7) is arranged to be widened by means of a wedge (9) which is pre-mounted in the bore of the extension (7).

## Revendications

1. Cheville expansible par percussion, destinée à être ancrée notamment dans un trou, évasé en cône vers l'intérieur, et composée d'une pièce d'ancrage (3) expansible, qui comporte un alésage (6), est fendue sur une partie de sa longueur à partir de son extrémité antérieure d'introduction et qu'il est possible d'ancrer en la repoussant sur un organe dilatateur (4) comportant un cône (5) d'expansion et appliqué contre le fond du trou, cheville caractérisée en ce que l'organe dilatateur (4) comporte un prolongement tubulaire (7), qui pénètre dans l'alésage (6) de la pièce d'ancrage (3), et dont l'extrémité se trouve dans une partie élargie de cet alésage (6) de la pièce d'ancrage (3) et peut être élargie une fois que ladite pièce (3) a été repoussée sur le cône (5) d'expansion de l'organe dilatateur (4).

2. Cheville expansible par percussion selon la revendication 1, caractérisée en ce que l'extrémité du prolongement (7) peut être élargie au moyen d'un coin (9) monté préalablement dans l'alésage de ce prolongement (7).

# Fig. 1

# Fig. 2

# Fig. 3